# EUROPEAN PATENT SPECIFICATION

(11) **EP 4 589 861 B1**
(45) Date of publication and mention of the grant of the patent: **07.10.2026**
(21) Application number: 24152901.5
(22) Date of filing: 19.01.2024
(51) Int. Cl.: H04B 7/185, H04L 41/0893, H04L 69/22

(54) **SEMANTIC ROUTING FOR TIME VARYING NETWORKS**
SEMANTISCHES ROUTING FÜR ZEITVERÄNDERLICHE NETZWERKE
ROUTAGE SEMANTIQUE POUR RESEAUX A VARIATION TEMPORELLE

(43) Date of publication of application: 23.07.2025
(73) Proprietor: Airbus S.A.S., 31700 Blagnac (FR)
(72) Inventor: Milheiro Mendes, Paulo-Jorge, 82024 Taufkirchen (DE)
(74) Representative: OTN Airbus SAS

(56) References cited:
- HAN L ET AL: "Semantic Address Based Instructive Routing for Satellite Network draft-lhan-satellite-instructive-routing-03; draft-lhan-satellite-instructive-routing-03.txt", no. 3, 2 September 2023 (2023-09-02), pages 1 - 28, XP015161783, Retrieved from the Internet <URL:https://tools.ietf.org/html/draft-lhan-satellite-instructive-routing-03> [retrieved on 20230902]
- HAN LIN ET AL: "New IP based semantic addressing and routing for LEO satellite networks", 2022 IEEE 30TH INTERNATIONAL CONFERENCE ON NETWORK PROTOCOLS (ICNP), IEEE, 30 October 2022 (2022-10-30), pages 1 - 6, XP034225877, DOI: 10.1109/ICNP55882.2022.9940332

## Description

### Technical Field

The present invention relates to a semantic routing method for time varying networks, which is a congestion-aware source-based routing solution for satellites with a distributed name resolution system.

### Background

Routing protocols currently used in the internet expect to maintain contemporaneous, end-to-end connected paths across a network. Changes to that connectivity, such as the loss of an adjacent peer, need the routing protocols to react to reduce the impact on the network traffic.

However, a growing number of use cases exist where predicted variations (restoration, activation, or loss) to the topology are an expected part of normal network operations. For example, in networks with mobile nodes, such as aerial vehicles (e.g. UAM, UAS, commercial aircraft) and spacecraft systems such as LEO constellations, links can be lost and re-established, or neighbours may change as a function of their mobility or availability of resources. In such time-varying networks, traffic might be routed based on other metrics than hop count, such as energy costs or expected availability of services, which may vary predictably over time. In these cases, the predicted loss and restoration of an adjacency, or formation of an alternate adjacency, should be seen as non-disruptive events.

One clear example of a time-varying network is a LEO (Low Earth Orbit Satellite) constellation. Satellite LEO constellations have been studied for decades under the assumption that satellites can directly communicate with each other in space using laser-based Inter-Satellite Links (ISLs), forming a space-based optical mesh network. A typical path for Internet access consists of an uplink, with Radio Frequency (RF) signals, from a user terminal to a satellite, a satellite-to-satellite optical path, and a RF downlink to a gateway connecting to the Internet. Due to the fast movement of satellites, frequent handoffs between user terminal/gateway and satellite are expected.

For the operation of a LEO constellation several networking aspects have to be considered, namely handling limits for packet drops, and latency, essentially determining the requirements or finding suitable network paths in a network with dynamic connectivity and restricted resources. In this scenario, a good routing solution is needed to provide a good distribution of traffic, while being aware about the flexibility of the network, in order to cope with link or node failures.

Besides the networking and traffic aspects, other system considerations, such as resource management may affect the performance of any solution aiming to route traffic over a time-varying network. such as: i) on-board radios may be turned off to allow other node processing; ii) optical terminals may be turned off when devices are too close, such as satellites near the poles; iii) network functions may be switched off if there are thermal considerations on the node. such as an increase in a node's operating temperature.

In the literature, various current routing algorithms for time-varying networks have been proposed, aiming to improve the network throughput and reduce end-to-end delays while supporting reliable connectivity. For instance, in the case of LEO constellations the aim is to use a routing framework that allows large amounts of data to be forwarded over long distances, through ISLs. However, the terrestrial core network is reasonably robust and resource-abundant now, and multi-hop transmission, through unstable ISLs, would bring additional repeat request overhead. Therefore, how to route traffic over LEO mega-constellation to provide ultra-reliable and low-latency communication services remains an open issue, as so it is the topic of this IDD.

Moreover, in order to suppose not only the dynamics of the network topology but also the needed adaptation to services, time-varying networks should be able to adjust the network architecture and configurations based on service requirements and availability. In the future it is envisioned that novel routing approaches to time-varying networks should be able to route traffic based on the service that is being communicated (and invoked) instead of focusing on the devices that are requesting and providing such service.

In this section we focus the analysis of prior art on a specific use-case of time-varying networks, satellite LEO constellations. However, the same solution can be applied to other scheduled time-varying networks, such as flying networks, in which devices move based on predefined routes (e.g. commercial aircraft).

Routing in satellites generally maps to two categories: snapshot routing, and dynamic routing. In the former case, the topology of the satellite constellation is supposed to be static or the duration of a snapshot and the routing is then performed on this static topology. Due to the different latency for a packet transmission (of the order of milliseconds) and the motion of the satellite (that can be in view of a ground station for several minutes), this assumption is reasonable. As the topology evolves, a new routing table is populated for the next snapshot. Routing tables can typically be precomputed in a central server and uploaded to minimize the processing workload in the satellite.

Snapshot bases solutions were already common in Hong Seong Chang, Byoung Wan Kirn, Chang Gun Lee, Yanghee Choi, Sang Lyul Mm, Hyun Suk Yang, and Chong Sang Kirn. 1995. Topological design and routing for low-Earth orbit satellite networks, in proceedings of GLOBECOM '95, by observing that the topology of the satellite constellation followed a limited number of possible states. Therefore, a Finite State Automaton (FSA) could be constructed ahead of time. For each state, a configuration could be pre-calculated and loaded into the satellite, meaning that satellite themselves did not have to perform computation, but only to load the topological configuration and routing that corresponds to a specific state similar snapshot approach, V.V. Gounder, R. Prakash, and H. Abu-Amara. 1999. Routing in LEObased satellite networks. In 1999 IEEE Emerging Technologies Symposium. Wireless Communications and Systems (IEEE Cat. No.99EX297). IEEE, 22.1-22.6., defines similar states, denoted as snapshots, which correspond to the topology of the satellite network at a particular instant of time. Each satellite stores the routing information corresponding to a few snapshots that are uploaded periodically from the ground stations. A similar approach, but that relies on the computation of snapshots on a centralized server, is followed by Contact Graph Routing, Juan Andres A Fraire, Olivier de Jonckere, Scott C Burleigh. Routing in the Space Intemet: A contact graph routing tutorial. Journal of Network and Computer Applications (JNCA), 2021, which is focused on scheduled Delay-Tolerant Networks (DTN) which can take advantage of a contact plan comprising the future network connectivity in order to make efficient forwarding decisions. With CGR, the centrally computed contact plan is uploaded to all satellites, allowing each satellite to compute the shortest router to any other satellite in the system, by using the contact plan with Dijkstra algorithm.

Other routing solutions that rely on computing shortest paths are based on the Open Shortest Path First (OSPF) protocol (IETF rf02328) which has been extended to fit the specific properties of LEO constellations. An example is the Area-based SatellitE Routing protocol (ASER), Xiang Zhang, Yuan Yang, Mingwei Xu, and Jing Luo. 2021. ASER: Scalable Distributed Routing Protocol for LEO Satellite Networks. In IEEE 46th Conference on Local Computer Networks (LCN), which is a hierarchical grouping of satellites within an area. ASER ground assumption is that the topology within an area is static, in which case ASER is used to connect these areas dynamically. Another example is the Orbit Prediction Short Path First (OPSPF), Tian Pan, Tao Huang, Xingchen Li, Yujie Chen, Wenhao Xue, and Yunjie Liu. 2019. OPSPF: Orbit Prediction Shortest Path First Routing for Resilient LED Satellite Networks, in IEEE Intemational Conference on Communications (ICC), which extends OSPF taking into account the periodic predictability of the apology. This fixes the issue of endless route convergence with OSPF that consumes expensive intersatellite link bandwidth.

All these solutions that aim to compute shortest paths based on contact plan information, such as CGR and other solutions based on OSPF and Dijkstra seem to work well as long as networks remain small or medium size, G. Wang, S. C. Burleigh, R. Wang, L. Shi, and Y. Qian, "Scoping contact graph-routing scalability: Investigating the system's usability in space-vehicle communication networks," IEEE Vehicular Technology Magazine, vol. 11, no. 4, pp. 46-52, Dec 2016. In all these approaches, the routing computation effort and its impact on the scalability of the network has been considered a secondary goal so far.

To solve the scalability issue, a common strategy is to divide the large satellite LEO constellation into several regions, being Dijkstra or a similar algorithm used inside each region to identify shortest paths between any pair of satellites, Hou Dongxu , Xiao Min , Fenlin Zhou, 'Routing Framework for LED Mega-constellation Based on Region Division", IETF draft (draft-hou-rtgwg-satellite-routing-framework-00), July 2023. Some proposals focus also on using Dijkstra or similar algorithm to coordinate the routing between different regions based on an abstract model in which each networked node represents one region, Pablo G. Madoery, Juan A. Fraire, Femando D. Raverta, Jorge M. Finochietto, Scott C. Burleigh, Managing Routing Scalability in Space DTNs", in Proc. of IEEE Intemational Conference on Wireless for Space and Extreme Environments (WiSEE), 2018.

The alternative to snapshot based solution is to devise dynamic routing protocols, based on which satellites forward packets based upon the current network configuration. This means that the routing protocol must dynamically adapt to changes in the topology, as the length of time a snapshot is stable is rather short, which is a problem similar to characterising the stability of a path in other type of time-varying networks - ad hoc networks, Claude Richard, Charles E Perkins, and Cedric Westphal. 2005. Defining an optimal active route timeout for the AODV routing protocol. In Proc. Second Annual IEEE Communications Society Conference on Sensor and Ad-Hoc Communications and Networks, (IEEE SECON). 26-29.

One example may pass by adapting well known dynamic routing protocols such as AODV (IETF rfc3561) to satellite networks. In this context the Location-Assisted On-demand outing (LAOR) protocol, E. Papapetrou, 5. Karapantazis, and F.-N. Pavlidou. 2007. Distributed on-demand routing for LED satellite systems. Computer Networks 51, 15 (2007), 4356-4376. invokes the shortest path discovery procedure independently or each individual communication request, which adds a significant overhead. For a highly dynamic topology, a protocol that allows for some path flexibility around the short path (such as OPRAH, Cedric Westphal. 2006. Opportunistic Routing in Dynamic Ad Hoc Networks: the OPRAH protocol. In 2006 IEEE International Conference on Mobile Ad Hoc and Sensor Systems.) may provide benefits over AODV.

In order to bring some flexibility to snapshot and dynamic routing protocols, allowing them to react to link failures, some protocols use repairing strategies, such as the destruction-resistant On-Demand Routing protocol DODR, Xuezhi Ji, Lixiang Liu, Pei Zhao, and Dapeng Wang. 2015. A destruction-resistant n-demand routing protocol for LED satellite network based on local repair. In 2015 l2th International Conference on Fuzzy Systems and Knowledge Discovery (FSKD). 2013-2018, which is a adhoc protocol that leverages route replies (RREPs in AODV) in the path discovery process, as well as a local repair strategy, to identify and fix broken paths quickly without incurring heavy overhead. Another example is the Disruption Tolerant Distributed Routing (DTDR) protocol, Jifeng Jin, Feng Tian, Zijian Yang, Hao Di, and Guotong Li. 2022. A Disruption Tolerant Distributed Routing Algorithm in LEO Satellite Networks. Applied Sciences 12, 8 (2022), which is able to react to failures by only broadcasting the failed link information (as opposed to link status updates) to reduce the overhead, by taking advantage of the relatively static (or periodic) mesh topology of the satellite constellation.

While all these protocols aim to provide failure recovery by ensuring a fast convergence time, another approach may be to avoid any dependency upon topology information, relying on geographic information instead. Examples are proposals for routing mechanisms that selects the next hop based upon minimising the remaining Euclidean distance towards the destination, T.R. Henderson and R.H. Katz. 2000. On distnbuted, geographicbased packet routing for LED satellite networks. In Globecom '00 - IEEE. Global Telecommunications Conference, Conference Record (Cat. No.00CH37137), Vol. 2. In regular conditions. geographic routing is close to the optimal path (bounding the delay difference by 10ms). However, such protocols may break down at the counterrotating seams, the polar regions, and close to the destination of a packet.

Geographic routing has been considered to handle many other time-varying topologies, such as in ad-hoc networks, Julien Herzen, Cedric Westphal, and Patrick Thiran. 2011. Scalable Routing Easy as PIE: a Practical Isometric Embedding Protocol. In IEEE ICNP. The benefit of geographic routing is that the routing is extremely simple, once the relative position of the current node, its neighbours and the destination is known: picking the neighbour's closest to the destination is a simple computation. This seems a good fit for satellite networks, in which satellites have resource constraints, but are aware of their geographic position. However, in a satellite network, the destination (on the ground) is not static with respect to the moving constellation. The topology also varies between the ascending and descending satellites, meaning that the possibility to use other types of addressing information besides the geoposition of devices may bring benefits.

This requirement of using different address semantics, is also aligned with the expectation that in the future different satellite systems will need to inter-operate. Therefore, defining protocols for an Internet of satellites based on instructive routing and semantic addressing may be appropriate, Lin Han, Richard Li, Alvaro Retana, chenmeiling, Li Su, and Ning Wang. Problems and Requirements of Satellite Constellation for Internet". Internet draft (draft-Ihan-problems-requirements-satellitenet-05), July 2023. By using the semantic address of LEO satellites, Lin Han, Alvaro Retana, and Richard Li. "Semantic Address Based Instructive Routing for Satellite Network". Internet draft draft-lhan-satellite-instructive-routing-03, Sept 2023, packet forwarding could be just a simple instruction like "forwarding the packet in a specified direction until reaching a specified satellite". Compared with the traditional hop-by-hop IP packet forwarding (based on Longest Prefix Match lookup for the routing table), the new solution can be more adaptive to the very dynamic network topology while the packet overhead is less than the IPv6 Segment Routing (SRv6). Another example by Han lin et all is "New IP based semantic addressing and routing for LEO satellite networks", in the 2022 IEEE 30TH Internation conference on Network Protocols (ICNP) (30 October 2022).

### Summary of the invention

It is an object to operate based on semantics such as geolocation, IP address, service name, information about congestion.

It is another object to have an embedded distributed system for resolving service names to semantic addresses.

It is another object to use source based routing allowing satellites to implement a simple routing engine.

It is another object to operate based on geographic routing, which is able to adapt to network dynamic, forwarding traffic via a set of satellites as dose as possible from the destination.

It is another object to, if aware of congestion, be able to route traffic around congested satellites.

It is another object to be able to support multicast traffic by allowing semantic addresses to include multiple destinations.

These objects are achieved by means of the subjects of the independent claims. Illustrative embodiments will be found in the dependent claims and the following description.

In comparison with other approaches that aim to route traffic over a constellation of LEO satellites, this invention has the following benefits:
- Operates based on semantics such as geolocation, IP address, service name, information about congestion.
- Has an embedded distributed system for resolving service names to semantic addresses.
- Uses source based routing allowing satellites to implement a simple routing engine.
- Operated based on geographic routing, which is able to adapt to network dynamic, forwarding traffic via a set of satellites as close as possible from the destination.
- If aware of congestion, being able to route traffic around congested satellites
- Is able to support multicast traffic by allowing semantic addresses to include multiple destinations.

In other words, the invention proposes a semantic routing method for time varying networks, which is a congestion-aware source-based routing solution for satellites LEO constellations with a distributed name resolution system.

The proposed mechanism allows traffic to be forwarded in a time-varying network, such as a LEO constellation by using semantic addresses which are built based on a combination of the geolocation of the area where the destination is plus an IPv6 address that identifies a specific service instance. In this sense the proposed solution is different from previous semantic routing tor satellite systems, which propose a method for routing based on the satellite semantic address. In the proposed solution there is no need to identify satellites and to track their position in a network topology.

The proposed routing solution allows the deployment of time-varying networks, such as LEO constellation, while being agnostic of locator-based addressing, since the address semantics relate to services being invoked (geoposition and Identifier). In order to reduce the delay needed to use traditional name resolution systems, such as Domain Name Services (DNS), the proposed routing protocol encompasses the needed signalling to allow edge routers to create semantic addresses based on the requested service name.

A time-varying network encompasses a set of moving nodes (operating as routers), each one with a set of point-to-point or omnidirectional wireless interfaces to neighbour nodes (e.g. radio links or free space optical links). Some of the nodes of the time-varying network may have an interface to gateway nodes (operating as border routers), which provide connectivity to non-time varying networks.

It is assumed that the earth's surface is divided in circular geometric areas with equal radius (configured value) and identified by the geolocation of its centrum. lt is also assumed that routers and border routers are aware of such division of the earth surface and that:
- Border routers can be deployed in fixed positions inside certain geometric areas, or can move inside and between geometric areas. Examples can be satellite ground stations or mobile satellite terminals.
- Routers can handover between adjacent geometric areas based on a predefined path (e.g. satellite orbit or aircraft route/mission). Examples can be satellites or aircraft.

During the announcement phase, border routers announce information about local installed services to all known border routers. In this operation. border routers create a semantic packet with the IP address of the border router as source address and the IP address of the final border router to be reached as destination address. The created semantic packet has a payload with a list of data items that identity local services, in which each item encompasses:
- Service name
- Service ID (IPv6 address)
- Geolocation ID of the border router geographic area

The semantic packet is created with an extended header that allows the payload to be distributed in a multicast faction.

The announcement phase comprises the following steps:
1. Border router order list of known border routers by incremental order of their distance to the current border router.
2. Border router creates a semantic packet with a list of several directives pairs of the following type:
   Forward.pkt.areaID with geolocation ID of the geographic area of destination border router
   Forward.pkt.servID with the IP address of the border router with radius R The list is ended with the directive Forward.pkt.end.
   The resulting directive list has two times + 1 the number of entries of the list created in step 1.
3. Border router executes the first directive on the list.
4. Routers receive the semantic packet and execute the directives starting from the first one. The following action may happen:
   - Router is not in the geographic area of the destination border router, in which case it will further forward the semantic packet to neighbour routers.
   - Router is in the geographic area of the destination border router, in which case the semantic packet is broadcasted within the geographic area until it reaches the router with a connection to the destination border router or expiring the radius **R. In** the former case the router sends the payload of the semantic packet to the border router. and the router executes the following directive in the semantic packet. All the other routers within the geographic area execute the last directive carried in the semantic packet (Forward.pkt.end).

During the forwarding phase the information previously exchanged between border routers is used to forward data packets in two modes: reactive and proactive.

Reactive mode: Border routers forward data packets to selected services based on a semantic packet. The forwarded semantic packets do not leave state in routers. This phase is triggered by the reception of data packets from customers outside the time-varying network.

Proactive mode: **In** this case the border routers trigger themselves a semantic packet with a path discovering message to specific services (e.g. with low delay requirements) in order to identify the most suitable path. The information about the identified path is placed in a local routing table and used as tags in future semantic packets, aiming to allow for a faster forwarding inside the time-varying network.

**In** the reactive mode, border routers trigger the transmission of a semantic packet to carry a data packet that was received from an interface connecting to an external network. **In** this operation, border routers create a semantic packet that is forwarded by routers, which do not store any state in the process. The semantic packet has a header with the **IP** address of the border router as source address and the **IP** address of the destination service (after the resolution step, as mentioned below), as well as a payload with the received data packet and an extended header that allows the payload to be distributed in a unicast mode.

The forwarding phase operating in a reactive mode comprises the following steps:
5. Border router receives a packet from an external network.
6. Border router uses the service name carried in the received data packet to check the local stored information in order to identify the border routers that host that service.
7. From the list of possible hosting border routers, one is selected based on a configured forwarding strategy.
8. Border router creates a semantic packet with the following routing directives in the extended header:
   - Forward.pkt.areaID with geolocation ID of the geographic area of the destination border router.
   - Forward.pkt.servID with the radius R used to forward the packet to the service ID (IPv6 address) indicated in the packet header.
   - Forward.pkt.end.
9. Border router executes the first directive on the list.
10. Routers receive the semantic packet and execute the directives starting from the first one. The following action may happen:
   - Router is not in the geographic area of the destination border router, in which case it will forward the semantic packet to the neighbour router that is geographically closer to the destination and which is the least congested one (based on information collected from the periodic information received from neighbour nodes).
   - Router is in the geographic area of the destination border router, in which case the semantic packet is broadcasted within the geographic area until it reaches the router with a connection to the service ID indicated in the packet header (destination address) or until expiring the radius R. In the former case the router sends the payload of the semantic packet to the border router. All routers within the geographic area execute the last directive carried in the semantic packet (Forward.pkt.end).

An example of a forwarded strategy is Load Balancing, in which case the border router selects as the next border router, the one for which it sent less packets in the past. Different forwarding strategies can be used for different types of service.

In the proactive mode, border routers trigger the transmission of a semantic packet to discover the best path to one or more of the services whose information is locally stored.

In this operation, border routers create a semantic packet that is forwarded by routers, which not store any state in the process. The semantic packet has the IP address of the border router as source address, and the service ID (IPv6 address) as destination address, as well as an extended header that allows the payload to be distributed in a unicast mode. and is started with a payload encompasses a Router address chain, which starts with the IP address of source border router.

The forwarding phase operating in a proactive mode has the following steps:
1. Border router selects one of the locally installed services
2. Border router creates a semantic packet with the following routing directives in the extended header:
   - Discover.path.to.areaID with geolocation ID of the geographic area of destination border router.
   - Create.reverse.pkt.
   - Forward.pkt.end.
3. Border router executes the first directive on the list.
4. Routers receive the semantic packet and execute the directives starting from the first one. The following action happens:
   - Router is not in the geographic area of the destination border router, in which case it:
      i. Identifies the neighbour router that is geographically closer to the destination and is the least congested one.
      ii. Adds the ID of the selected neighbour node at the head of the Router address chain in the packet payload.
      iii. Forwards the semantic packet to the selected neighbour router.
   - Router is in the geographic area of the destination border router, in which case the router adds its ID to the head of the Router address chain, and executes the next directive.
5. The destination router creates a new semantic packet with the IP address of the current router as source address, the service ID (lPv6 address) as carried in the previous packet as destination address, the chain-index in the packet head at 1, and the following directives:
   - Forward.pkt.chainID with Router address chain collected from the received semantic packet.
   - Stores.chain.servID.
   - Fwd.pkt.End.
6. The destination router executes the first directive.
7. Routers execute the first directive on the list, forwarding the semantic packet to the router whose IP address is the first as indicated in the directive and increase the chain-index by 1.
8. Router that receives a semantic packet with a chain-index bigger than the size of Router address chain (which indicates that the router is the source border router) executes the second directive, storing the Router address chain associated to the service which ID as indicated in the packet header as destination IP.

This process is repeated to all services for which the border router would like to have a faster reaction (e.g. lower latency) when data packets arrive.

For all services that have a non-empty Router address chain, the border router will use the following procedure to forward data packets:
1. Border router receives a packet from an external network.
2. Border router uses the service name carried in the received data packet to check the local stored information in order to identify the Router address chain associated with that service.
3. Border router creates a semantic packet with a header with the IP address of the border router as source address and service ID (IP v6 address) of the selected service as destination address, as well as with the following routing directives:
   - Forward.pkt.chainID with the Reuter address chain locally stored for the received service name.
   - Foward.pkt.servID with the radius R used to forward the packet to the service ID (lPv6 address) indicated in the packet header.
   - Forward.pkt.end.
4. Border router executes the first directive on the list.
5. Routers receive the semantic packet and execute the directives starting from the first one. The following action may happen:
   - If the Router address chain is not empty, router removes first (head) address from the chain and forwards the resulting packet to the neighbour with that IP address.

If the Router address chain is empty, the router broadcasts the semantic packet until reaching a router with a connection to the service ID or until expiring the radius R. In the former case the router sends the payload of the semantic packet toward the border router that is reachable via the interfaces configured with the ServiceID. All routers within the geographic area execute the last directive carried in the semantic packet (Forward.pkt. end).

The two operational phases (announcement and forwarding) make use of a semantic packet format, which is based on an IPv6 routing header defined based on a new routing type "semantic Routing", which has the following fields:
- Routing type: semantic
- Directive index: number of octets from the start of directive list. The initial value is set to 0 and it points to the first directive to be executed. The value is incremented by the number of octets of the total size of a directive after the directive is executed.
- Left directives: Remained number of directives. The initial value is set to the total number of directives. The value is decremented by one after one directive is executed. The minimum number is one, and it indicates that the end of the directive list is reached.
- Chain Index: used in proactive mode to point to the current element in a routing chain used in some directives.
- Directive list: a list of directives. This list may have variable size.
- Paddings: set accordingly with IETF RFC8200.

The semantic packet is used to carry different directive lists on different phases of the Protocol:
The actions to be performed for each type of routing directive is described in this section.

**Table 1 presents a summary of the name and arguments of each directive.**

| **Directive Name** | **Action** | **Arguments** | |
|---|---|---|---|
| *Forward.pkt.arealD* | Forward packet to specific geographic area | Geolocation ID of the geographic area of the destination border router. | |
| *Forward.pkt.servID* | Broadcast packet towards specific Service ID | • | IP address of the border router with radius R. |
| | | • | Radius R used to forward the packet to the service ID (IPv6 address) indicated in the packet header. |
| *Discover.path.to.areaID* | Collects information about routers in the path towards a specific geographic area | Geolocation ID of the geographic area of the destination border router. | |
| *Create.reverse.pki* | Creates a new semantic packet | Null (creates a new semantic packet with information collected in the header and extended header of a received semantic packet) | |
| *Forward.pkt.chainID* | *Forwards packet via a* set *of know routers* | • | *Router address chain* collected from the received semantic packet. |
| | | • | *Router address chain* locally stored for the received service name. |
| *Stores.chain.servID* | Store information about a received chain of routers | Null (stores the *Router address chain* associated to the service which ID as indicated in the packet header as destination IP) | |
| *Forward.pkt.end* | Ends the execution of directives | Null | |

### Brief description of the figures

- Fig. 1: shows a flowchart of the method;
- Fig. 2: shows the semantic route general signalling; and
- Fig. 3: shows a format of a semantic packet.

### Detailed description

The illustrations in the figures are schematic and not to scale. If the same reference signs are used in different figures in the following description of the figures, they designate identical or similar elements. However, identical or similar elements can also be designated by different reference symbols.

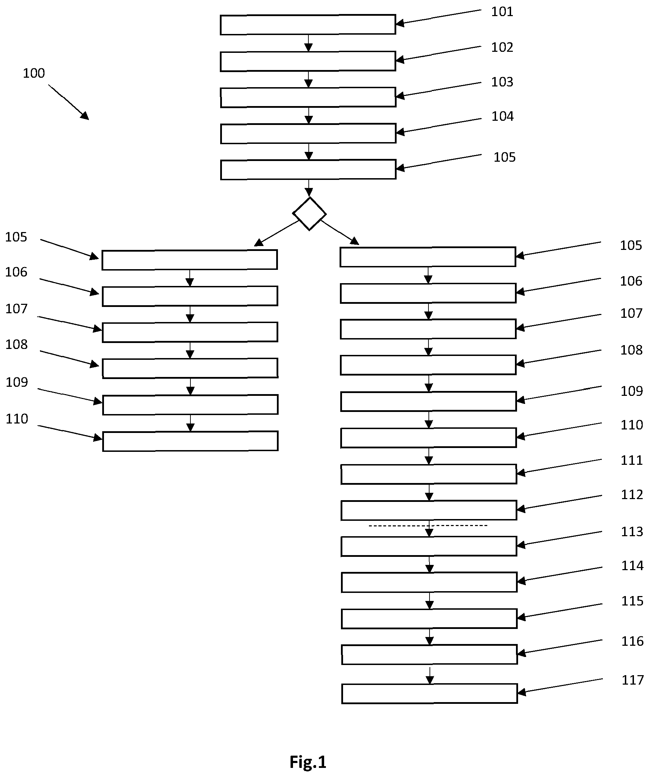

Fig. 1 shows a flowchart of a semantic routing method 100 for time varying networks, wherein the method 100 is configured to provide a congestion-aware source-based routing for satellites, preferably LEO constellations, with a distributed name resolution system, comprising
- a multitude of routers,
- a multitude of border routers,
- a service provider

wherein the method 100 comprises an announcement phase comprising the following steps:
   101 Create a border router order list of the multitude of border routers by incremental order their distance to a current border router;
   102 Create, by the current border router, a semantic packet with a list of several directives pairs of the following type:
      Forward (Forward.pkt.areaID) the semantic packet to specific geographic area with geolocation ID of a geographic area of a destination border router;
      Broadcast (Forward.pkt.servID) the semantic packet towards specific service ID with the IP address of the multitude of a border router with a radius R;
      End (Forward.pkt.end) the execution of directives;
   103 Execute, by the current border router, the first directive on the list;
   104 Receive, by the multitude of routers, the semantic packet and execute the directives starting from the first one, wherein:
      - if a router is not in the geographic area of the destination border router, further forward the semantic packet to neighbour routers; or
      - if a router is in the geographic area of the destination border router, the semantic packet is broadcasted within the geographic area until it reaches a router with a connection to the destination border router or expiring the radius R, wherein the router with a connection to the destination border router or expiring the radius R sends the payload of the semantic packet to the current border router and the router with a connection to the destination border router or expiring the radius R executes the following directive in the semantic packet, wherein all the other routers within the geographic area execute the last directive carried in the semantic packet (Forward.pkt.end);
wherein the method 100 further comprises a forwarding phase, wherein information previously exchanged between the multitude of border routers is used to forward data packets, wherein the forwarding phase is configured to be executed in a proactive mode or a reactive mode, wherein:
   in the proactive mode, the multitude of border routers trigger themselves a semantic packet with a path discovering message to specific services in order to identify the most suitable path, wherein the information about the identified path is placed in a local routing table and used as tags in future semantic packets allowing a faster forwarding inside the time-varying network, and
   in the reactive mode, the multitude of border routers trigger the transmission of a semantic packet to carry a data packet that was received from an interface connecting to an external network, wherein the multitude of border routers create a semantic packet that is forwarded by routers, which do not store any state in the process, wherein the semantic packet comprises a header with the IP address of the border router as source address and the IP address of a destination service, as well as a payload with the received data packet and an extended header that allows the payload to be distributed in a unicast mode,
   such that the method 100 is operated based on geographic routing, which is able to adapt to network dynamic, forwarding traffic via a set of satellites as close as possible from the destination,
wherein executing the forwarding phase in the reactive mode (left branch) comprises the following steps:
105.1 Receive, by the multitude of border routers, a semantic packet from an external network,
106.1 Use, by the multitude of border routers, a service name carried in the received data packet to check local stored information in order to identify a border router hosting that service,
107.1 Select, from the list of possible hosting border routers, a specific one that is based on a configured forwarding strategy,
108.1 Create, by the multitude of border routers, of a semantic packet with the following routing directives in the extended header:
   - Forward (Forward.pkt.areaID) packet to specific geographic area with geolocation ID of the geographic area of the destination border router;
   - Broadcast (Forward.pkt.servID) packet towards specific service ID with the radius R used to forward the packet to the service ID (IPv6 address) indicated in the packet header;
   - End (Forward.pkt.end) the execution of directives.
109.1 Execute, by the multitude of border routers, the first directive on the list.
110.1 Receive the semantic packet and execute the directives, by the multitude of border routers, starting from the first one, wherein:
   - if a router is not in the geographic area of the destination border router, forward the semantic packet to the neighbour router that is geographically closer to the destination and which is the least congested one; or
   - if a router is in the geographic area of the destination border router, the semantic packet is broadcasted within the geographic area until it reaches the router with a connection to the service ID indicated in the packet header or until expiring the radius R, wherein the router sends the payload of the semantic packet to the border router, wherein all the other routers within the geographic area execute the last directive carried in the semantic packet (Forward. pkt. end).

Executing the forwarding phase in the proactive mode (right branch) comprises the following steps:
105.2 Select, by the multitude of border routers, one of locally installed services,
106.2 Create, by the multitude of border routers, a semantic packet with the following routing directives in the extended header:
   - Collect (Discover.path.to.areaID) information about routers in the path towards a specific geographic area with geolocation ID of the geographic area of the destination border router;
   - Create (Create.reverse.pkt) a new semantic packet;
   - End (Forward.pkt.end) execution of directives;
107.2 Execute, by the multitude of border routers, the first directive on the list,
108.2 Receive, by the multitude of border routers, the semantic packet and execute the directives starting from the first one, wherein:
   - if the router is not in the geographic area of the destination border router, the router:
      i. Identifies the neighbour router that is geographically closer to the destination and is the least congested one;
      ii. Adds the ID of the selected neighbour node at the head of the router address chain in the packet payload;
      iii. Forwards the semantic packet to the selected neighbour router;
         or
   - if the router is in the geographic area of the destination border router, the router adds its ID to the head of the Router address chain, and executes the next directive, 109.2 Create, by the destination router, a new semantic packet with the IP address of the current router as source address, the service ID as carried in the previous packet as destination address, the chain-index in the packet head at 1, and the following directives:
   - Forward (Forward.pkt.chainID) the semantic packet to specific geographic area with router address chain collected from the received semantic packet;
   - Store (Stores.chain.servID) information about a received chain of routers;
   - End (Forward.pkt.end) execution of directives.
110.2 Execute, by the destination router, the first directive,
111.2 Execute, by the multitude of border routers, the first directive on the list, forwarding the semantic packet to the router whose IP address is the first as indicated in the directive and increase the chain-index by 1,
112.2 Execute the second directive, by the multitude of routers receiving a semantic packet with a chain-index bigger than the size of the router address chain, and store the router address chain associated to the service which ID as indicated in the packet header as destination IP.

For all services that have a non-empty router address chain, the border router will use the following procedure to forward data packets:
113 Receive, by the border router, a packet from an external network;
114 Use, by the border router, the service name carried in the received data packet to check the local stored information in order to identify the router address chain associated with that service;
115 Create, by the border router, a semantic packet with a header with the IP address of the border router as source address and service ID of the selected service as destination address, as well as with the following routing directives:
   - Forward (Forward.pkt.chainID) packet via a set of known routers with the Router address chain locally stored for the received service name.
   - Broadcast (Foward.pkt.servID) the semantic packet towards specific service ID with the radius R used to forward the packet to the service ID (lPv6 address) indicated in the packet header.
   - End (Forward.pkt.end) the execution of directives;
116 Execute, by the border router, the first directive on the list;
117 Receive, by the multitude of routers, the semantic packet and execute the directives starting from the first one,
   wherein, if the router address chain is not empty, the router removes first address from the router address chain and forwards the resulting packet to the neighbour router with that IP address,
   wherein, if the router address chain is empty, the router broadcasts the semantic packet until reaching a router with a connection to the service ID or until expiring the radius R, wherein the router sends the payload of the semantic packet toward the border router that is reachable via the interfaces configured with the ServiceID, wherein all routers within the geographic area execute the last directive carried in the semantic packet (Forward.pkt. end).

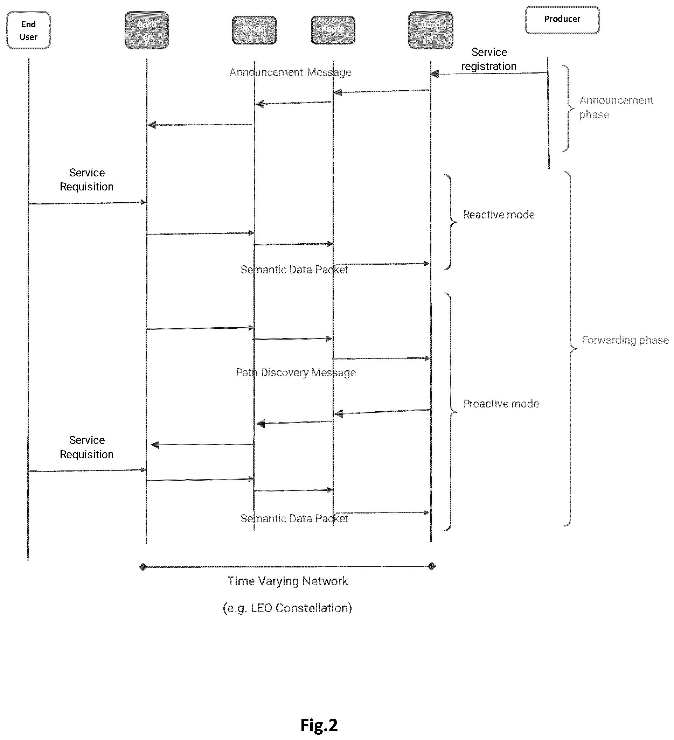

Fig. 2 shows the semantic route general signalling. It illustrates the packet exchange processes occurring between border routers, and passing over a selected set of routers, in order to implement the proposed semantic routing protocol. As can be seen, the proposed semantic routing protocol encompasses an announcement phase and a forwarding phase. In the latest case, the forwarding phase can follow a reactive or proactive behaviour, as described above.

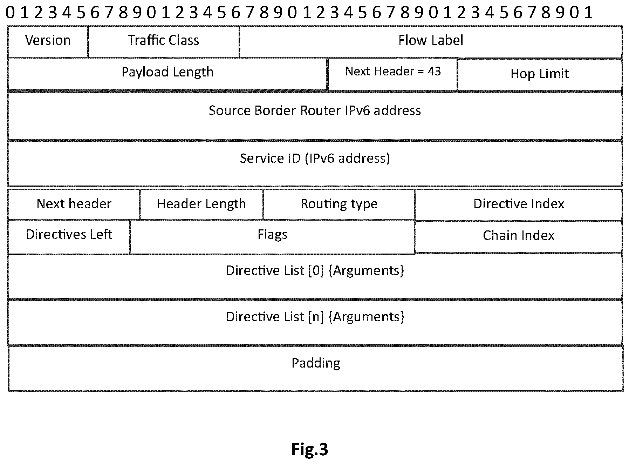

Fig. 3 shows a format of a semantic packet. The two operational phases (announcement and forwarding) make use of a semantic packet format, which is based on an IPv6 routing header defined based on a new routing type "semantic Routing", which has the following fields:
- Routing type: semantic
- Directive index: number of octets from the start of directive list. The initial value is set to 0 and it points to the first directive to be executed. The value is incremented by the number of octets of the total size of a directive after the directive is executed.
- Left directives: Remained number of directives. The initial value is set to the total number of directives. The value is decremented by one after one directive is executed. The minimum number is one, and it indicates that the end of the directive list is reached.
- Chain Index: used in proactive mode to point to the current element in a routing chain used in some directives.
- Directive list: a list of directives. This list may have variable size.
- Paddings: set accordingly with IETF RFC8200.

In comparison with other approaches that aim to route traffic over a constellation of LEO satellites, this invention has the following benefits:
- Operates based on semantics such as geolocation, IP address, service name, information about congestion.
- Has an embedded distributed system for resolving service names to semantic addresses.
- Uses source based routing allowing satellites to implement a simple routing engine.
- Operated based on geographic routing, which is able to adapt to network dynamic, forwarding traffic via a set of satellites as close as possible from the destination.
- If aware of congestion, being able to route traffic around congested satellites.
- Is able to support multicast traffic by allowing semantic addresses to include multiple destinations.

## Claims

1. A semantic routing method (100) for time varying networks, wherein the method (100) is configured to provide a congestion-aware source-based routing for satellites, preferably LEO constellations, with a distributed name resolution system, comprising
- a multitude of routers,
- a multitude of border routers, and
- a service provider,
wherein the method (100) comprises an announcement phase comprising the following steps:
(101) Create a border router order list of the multitude of border routers by incremental order their distance to a current border router;
(102) Create, by the current border router, a semantic packet with a list of several directives pairs of the following type:
Forward (Forward.pkt.areaID) the semantic packet to a specific geographic area with a geolocation ID of a geographic area of a destination border router;
Broadcast (Forward.pkt.servID) the semantic packet towards a specific service ID with the IP address of the multitude of border routers with a radius R;
End (Forward.pkt.end) the execution of directives;
(103) Execute, by the current border router, the first directive on the list;
(104) Receive, by the multitude of routers, the semantic packet and execute the directives starting from the first one, wherein:
- if a router is not in the geographic area of the destination border router, further forward the semantic packet to neighbour routers; or
- if a router is in the geographic area of the destination border router, the semantic packet is broadcasted within the geographic area until it reaches a router with a connection to the destination border router or expiring the radius R, wherein the router with a connection to the destination border router or expiring the radius R sends the payload of the semantic packet to the current border router and the router with a connection to the destination border router or expiring the radius R executes the following directive in the semantic packet, wherein all the other routers within the geographic area execute the last directive carried in the semantic packet (Forward.pkt.end);
wherein the method (100) further comprises a forwarding phase, wherein information previously exchanged between the multitude of border routers is used to forward data packets, wherein the forwarding phase is configured to be executed in a proactive mode or a reactive mode, wherein:
in the proactive mode, the multitude of border routers trigger themselves a semantic packet with a path discovering message to specific services in order to identify the most suitable path, wherein the information about the identified path is placed in a local routing table and used as tags in future semantic packets allowing a faster forwarding inside the time-varying network, and
in the reactive mode, the multitude of border routers trigger the transmission of a semantic packet to carry a data packet that was received from an interface connecting to an external network, wherein the multitude of border routers create a semantic packet that is forwarded by routers, which do not store any state in the process, wherein the semantic packet comprises a header with the IP address of the border router as source address and the IP address of a destination service, as well as a payload with the received data packet and an extended header that allows the payload to be distributed in a unicast mode,
such that the method (100) is operated based on geographic routing, which is able to adapt to network dynamic, forwarding traffic via a set of satellites as close as possible from the destination.

2. Method (100) according to claim 1, wherein executing the forwarding phase in the reactive mode comprises the following steps
(105.1) Receive, by the multitude of border routers, a semantic packet from an external network.

3. Method (100) according to claim 2, further comprising the following step:
(106.1) Use, by the multitude of border routers, a service name carried in the received data packet to check local stored information in order to identify a border router hosting that service.

4. Method (100) according to claim 3, further comprising the following step:
(107.1) Select, from the list of possible hosting border routers, a specific one that is based on a configured forwarding strategy.

5. Method (100) according to claim 4, further comprising the following steps:
(108.1) Create, by the multitude of border routers, of a semantic packet with the following routing directives in the extended header:
- Forward (Forward.pkt.areaID) packet to a specific geographic area with a d geolocation ID of the geographic area of the destination border router;
- Broadcast (Forward.pkt.servID) packet towards a specific service ID with the radius R used to forward the packet to the service ID (IPv6 address) indicated in the packet header;
- End (Forward.pkt.end) the execution of directives.
(109.1) Execute, by the multitude of border routers, the first directive on the list.

6. Method (100) according to claim 5, further comprising the following step:
(110.1) Receive the semantic packet and execute the directives, by the multitude of border routers, starting from the first one, wherein:
- if a router is not in the geographic area of the destination border router, forward the semantic packet to the neighbour router that is geographically closer to the destination and which is the least congested one; or
- if a router is in the geographic area of the destination border router, the semantic packet is broadcasted within the geographic area until it reaches the router with a connection to the service ID indicated in the packet header or until expiring the radius R, wherein the router sends the payload of the semantic packet to the border router, wherein all the other routers within the geographic area execute the last directive carried in the semantic packet (Forward.pkt.end).

7. Method (100) according to claim 1, wherein executing the forwarding phase in the proactive mode comprises the following steps:
(105.2) Select, by the multitude of border routers, one of locally installed services.

8. Method (100) according to claim 7, further comprising the following step:
(106.2) Create, by the multitude of border routers, a semantic packet with the following routing directives in the extended header:
- Collect (Discover.path.to.areaID) information about routers in the path towards a specific geographic area with geolocation ID of the geographic area of the destination border router;
- Create (Create.reverse.pkt) a new semantic packet;
- End (Forward.pkt.end) execution of directives;
(107.2) Execute, by the multitude of border routers, the first directive on the list.

9. Method (100) according to claim 8, further comprising the following step:
(108.2) Receive, by the multitude of border routers, the semantic packet and execute the directives starting from the first one, wherein:
- if the router is not in the geographic area of the destination border router, the router:
i. Identifies the neighbour router that is geographically closer to the destination and is the least congested one;
ii. Adds the ID of the selected neighbour node at the head of the router address chain in the packet payload;
iii. Forwards the semantic packet to the selected neighbour router; or
- if the router is in the geographic area of the destination border router, the router adds its ID to the head of the Router address chain, and executes the next directive.

10. Method (100) according to claim 9, further comprising the following step:
(109.2) Create, by the destination router, a new semantic packet with the IP address of the current router as source address, the service ID as carried in the previous packet as destination address, a chain-index in the packet head at 1, and the following directives:
- Forward (Forward.pkt.chainID) the semantic packet to specific geographic area with router address chain collected from the received semantic packet;
- Store (Stores.chain.servID) information about a received chain of routers;
- End (Forward.pkt.end) execution of directives.

11. Method (100) according to claim 10, further comprising the following step:
(110.2) Execute, by the destination router, the first directive.

12. Method (100) according to claim 11, further comprising the following step:
(111.2) Execute, by the multitude of border routers, the first directive on the list, forwarding the semantic packet to the router whose IP address is the first as indicated in the directive and increase the chain-index by 1.

13. Method (100) according to claim 12, further comprising the following step:
(112.2) Execute the second directive, by the multitude of routers receiving a semantic packet with a chain-index bigger than the size of the router address chain, and store the router address chain associated to the service which ID as indicated in the packet header as destination IP.

14. Method (100) according to claim 7 to 13, wherein for all services that have a non-empty router address chain, the border router will use the following procedure to forward data packets:
(113) Receive, by the border router, a packet from an external network;
(114) Use, by the border router, the service name carried in the received data packet to check the local stored information in order to identify the router address chain associated with that service;
(115) Create, by the border router, a semantic packet with a header with the IP address of the border router as source address and service ID of the selected service as destination address, as well as with the following routing directives:
- Forward (Forward.pkt.chainID) packet via a set of known routers with the Router address chain locally stored for the received service name.
- Broadcast (Foward.pkt.servID) the semantic packet towards specific service ID with the radius R used to forward the packet to the service ID (lPv6 address) indicated in the packet header.
- End (Forward.pkt.end) the execution of directives;
(116) Execute, by the border router, the first directive on the list;
(117) Receive, by the multitude of routers, the semantic packet and execute the directives starting from the first one,
wherein, if the router address chain is not empty, the router removes first address from the router address chain and forwards the resulting packet to the neighbour router with that IP address.

15. Method (100) according to claim 14, wherein, if the router address chain is empty, the router broadcasts the semantic packet until reaching a router with a connection to the service ID or until expiring the radius R, wherein the router sends the payload of the semantic packet toward the border router that is reachable via the interfaces configured with the ServiceID, wherein all routers within the geographic area execute the last directive carried in the semantic packet (Forward.pkt.end).

## Patentansprüche

1. Semantisches Routing-Verfahren (100) für zeitveränderliche Netzwerke, wobei das Verfahren (100) dafür konfiguriert ist, ein überlastungsbewusstes quellenbasiertes Routing für Satelliten, vorzugsweise LEO-Konstellationen, mit einem verteilten Namensauflösungssystem bereitzustellen, umfassend:
- eine Vielzahl von Routern,
- eine Vielzahl von Border-Routern und
- einen Dienstanbieter,
wobei das Verfahren (100) eine Ankündigungsphase umfasst, die die folgenden Schritte umfasst:
(101) Erstellen einer Border-Router-Sortierliste der Vielzahl von Border-Routern nach aufsteigender Reihenfolge ihres Abstands zu einem aktuellen Border-Router;
(102) Erstellen, durch den aktuellen Border-Router, eines semantischen Pakets mit einer Liste mehrerer Anweisungspaare des folgenden Typs:
Weiterleiten (Forward.pkt.areaID) des semantischen Pakets an einen bestimmten geografischen Bereich mit einer Geolokalisierungs-ID eines geografischen Bereichs eines Ziel-Border-Routers;
Rundsenden (Forward.pkt.servID) des semantischen Pakets in Richtung einer bestimmten Dienst-ID mit der IP-Adresse der Vielzahl von Border-Routern mit einem Radius $R$;
Beenden (Forward.pkt.end) der Ausführung von Anweisungen;
(103) Ausführen, durch den aktuellen Border-Router, der ersten Anweisung auf der Liste;
(104) Empfangen, durch die Vielzahl von Routern, des semantischen Pakets und Ausführen der Anweisungen beginnend mit der ersten, wobei:
- wenn sich ein Router nicht im geografischen Bereich des Ziel-Border-Routers befindet, das semantische Paket an Nachbarrouter weitergeleitet wird; oder
- wenn sich ein Router im geografischen Bereich des Ziel-Border-Routers befindet, das semantische Paket innerhalb des geografischen Bereichs rundgesendet wird, bis es einen Router mit einer Verbindung zum Ziel-Border-Router erreicht oder der Radius R abläuft, wobei der Router mit einer Verbindung zum Ziel-Border-Router oder nach Ablauf des Radius R die Nutzlast des semantischen Pakets an den aktuellen Border-Router sendet und der Router mit einer Verbindung zum Ziel-Border-Router oder nach Ablauf des Radius R die folgende Anweisung im semantischen Paket ausführt, wobei alle anderen Router innerhalb des geografischen Bereichs die letzte im semantischen Paket enthaltene Anweisung (Forward.pkt.end) ausführen;
wobei das Verfahren (100) ferner eine Weiterleitungsphase umfasst, wobei zuvor zwischen der Vielzahl von Border-Routern ausgetauschte Informationen verwendet werden, um Datenpakete weiterzuleiten, wobei die Weiterleitungsphase dafür konfiguriert ist, in einem proaktiven Modus oder einem reaktiven Modus ausgeführt zu werden, wobei:
im proaktiven Modus die Vielzahl von Border-Routern selbst ein semantisches Paket mit einer Pfadentdeckungsnachricht zu bestimmten Diensten auslösen, um den am besten geeigneten Pfad zu identifizieren, wobei die Informationen über den identifizierten Pfad in einer lokalen Routing-Tabelle abgelegt und als Tags in zukünftigen semantischen Paketen verwendet werden, was eine schnellere Weiterleitung innerhalb des zeitveränderlichen Netzwerks ermöglicht, und
im reaktiven Modus die Vielzahl von Border-Routern die Übertragung eines semantischen Pakets auslösen, um ein Datenpaket zu tragen, das von einer mit einem externen Netzwerk verbindenden Schnittstelle empfangen wurde, wobei die Vielzahl von Border-Routern ein semantisches Paket erstellen, das von Routern weitergeleitet wird, die dabei keinen Zustand speichern, wobei das semantische Paket einen Header mit der IP-Adresse des Border-Routers als Quelladresse und der IP-Adresse eines Zieldienstes sowie eine Nutzlast mit dem empfangenen Datenpaket und einen erweiterten Header umfasst, der es ermöglicht, die Nutzlast in einem Unicast-Modus zu verteilen,
so dass das Verfahren (100) auf der Grundlage von geografischem Routing betrieben wird, das in der Lage ist, sich an die Netzwerkdynamik anzupassen, wodurch Verkehr über einen Satz von Satelliten so nahe wie möglich am Ziel weitergeleitet wird.

2. Verfahren (100) nach Anspruch 1, wobei das Ausführen der Weiterleitungsphase im reaktiven Modus die folgenden Schritte umfasst:
(105.1) Empfangen, durch die Vielzahl von Border-Routern, eines semantischen Pakets von einem externen Netzwerk.

3. Verfahren (100) nach Anspruch 2, ferner umfassend den folgenden Schritt:
(106.1) Verwenden, durch die Vielzahl von Border-Routern, eines im empfangenen Datenpaket enthaltenen Dienstnamens zur Überprüfung lokal gespeicherter Informationen, um einen Border-Router zu identifizieren, der diesen Dienst hostet.

4. Verfahren (100) nach Anspruch 3, ferner umfassend den folgenden Schritt:
(107.1) Auswählen, aus der Liste möglicher hostender Border-Router, eines bestimmten Border-Routers basierend auf einer konfigurierten Weiterleitungsstrategie.

5. Verfahren (100) nach Anspruch 4, ferner umfassend die folgenden Schritte:
(108.1) Erstellen, durch die Vielzahl von Border-Routern, eines semantischen Pakets mit den folgenden Routing-Anweisungen im erweiterten Header:
Weiterleiten (Forward.pkt.areaID) des Pakets an einen bestimmten geografischen Bereich mit einer Geolokalisierungs-ID des geografischen Bereichs des Ziel-Border-Routers;
Rundsenden (Forward.pkt.servID) des Pakets in Richtung einer bestimmten Dienst-ID mit dem Radius R, der verwendet wird, um das Paket an die im Paket-Header angegebene Dienst-ID (IPv6-Adresse) weiterzuleiten;
Beenden (Forward.pkt.end) der Ausführung von Anweisungen;
(109.1) Ausführen, durch die Vielzahl von Border-Routern, der ersten Anweisung auf der Liste.

6. Verfahren (100) nach Anspruch 5, ferner umfassend den folgenden Schritt:
(110.1) Empfangen des semantischen Pakets und Ausführen der Anweisungen, durch die Vielzahl von Border-Routern, beginnend mit der ersten, wobei:
- wenn sich ein Router nicht im geografischen Bereich des Ziel-Border-Routers befindet, Weiterleiten des semantischen Pakets an den Nachbarrouter, der dem Ziel geografisch näher liegt und am wenigsten überlastet ist; oder
- wenn sich ein Router im geografischen Bereich des Ziel-Border-Routers befindet, das semantische Paket innerhalb des geografischen Bereichs rundgesendet wird, bis es den Router mit einer Verbindung zu der im Paket-Header angegebenen Dienst-ID erreicht oder der Radius R abläuft, wobei der Router die Nutzlast des semantischen Pakets an den Border-Router sendet, wobei alle anderen Router innerhalb des geografischen Bereichs die letzte im semantischen Paket enthaltene Anweisung (Forward.pkt.end) ausführen.

7. Verfahren (100) nach Anspruch 1, wobei das Ausführen der Weiterleitungsphase im proaktiven Modus die folgenden Schritte umfasst:
(105.2) Auswählen, durch die Vielzahl von Border-Routern, eines von lokal installierten Diensten.

8. Verfahren (100) nach Anspruch 7, ferner umfassend den folgenden Schritt:
(106.2) Erstellen, durch die Vielzahl von Border-Routern, eines semantischen Pakets mit den folgenden Routing-Anweisungen im erweiterten Header:
- Sammeln (Discover.path.to.areaID) von Informationen über Router im Pfad zu einem bestimmten geografischen Bereich mit der Geolokalisierungs-ID des geografischen Bereichs des Ziel-Border-Routers;
- Erstellen (Create.reverse.pkt) eines neuen semantischen Pakets;
- Beenden (Forward.pkt.end) der Ausführung von Anweisungen;
(107.2) Ausführen, durch die Vielzahl von Border-Routern, der ersten Anweisung auf der Liste.

9. Verfahren (100) nach Anspruch 8, ferner umfassend den folgenden Schritt:
(108.2) Empfangen, durch die Vielzahl von Border-Routern, des semantischen Pakets und Ausführen der Anweisungen beginnend mit der ersten, wobei:
- wenn sich der Router nicht im geografischen Bereich des Ziel-Border-Routers befindet, der Router:
i. den Nachbarrouter identifiziert, der dem Ziel geografisch näher liegt und am wenigsten überlastet ist;
ii. die ID des ausgewählten Nachbarknotens an der Spitze der Router-Adresskette in der Paketnutzlast hinzufügt;
iii. das semantische Paket an den ausgewählten Nachbarrouter weiterleitet;
oder
- wenn sich der Router im geografischen Bereich des Ziel-Border-Routers befindet, der Router seine ID an der Spitze der Router-Adresskette hinzufügt und die nächste Anweisung ausführt.

10. Verfahren (100) nach Anspruch 9, ferner umfassend den folgenden Schritt:
(109.2) Erstellen, durch den Ziel-Router, eines neuen semantischen Pakets mit der IP-Adresse des aktuellen Routers als Quelladresse, der im vorherigen Paket enthaltenen Dienst-ID als Zieladresse, ein Kettenindex im Paket-Kopf auf 1 gesetzt, und den folgenden Anweisungen:
- Weiterleiten (Forward.pkt.chainID) des semantischen Pakets an einen bestimmten geografischen Bereich mit der aus dem empfangenen semantischen Paket gesammelten Router-Adresskette;
- Speichern (Stores.chain.servID) von Informationen über eine empfangene Kette von Routern;
- Beenden (Forward.pkt.end) der Ausführung von Anweisungen.

11. Verfahren (100) nach Anspruch 10, ferner umfassend den folgenden Schritt:
(110.2) Ausführen, durch den Ziel-Router, der ersten Anweisung.

12. Verfahren (100) nach Anspruch 11, ferner umfassend den folgenden Schritt:
(111.2) Ausführen, durch die Vielzahl von Border-Routern, der ersten Anweisung auf der Liste, Weiterleiten des semantischen Pakets an den Router, dessen IP-Adresse die erste wie in der Anweisung angegeben ist, und Erhöhen des Kettenindex um 1.

13. Verfahren (100) nach Anspruch 12, ferner umfassend den folgenden Schritt:
(112.2) Ausführen der zweiten Anweisung, durch die Vielzahl von Routern, die ein semantisches Paket mit einem Kettenindex empfangen, der größer als die Größe der Router-Adresskette ist, und Speichern der Router-Adresskette, die dem Dienst zugeordnet ist, dessen ID wie im Paket-Header angegeben die Ziel-IP ist.

14. Verfahren (100) nach den Ansprüchen 7 bis 13, wobei für alle Dienste, die eine nichtleere Router-Adresskette aufweisen, der Border-Router den folgenden Ablauf zum Weiterleiten von Datenpaketen verwendet:
(113) Empfangen, durch den Border-Router, eines Pakets von einem externen Netzwerk;
(114) Verwenden, durch den Border-Router, des im empfangenen Datenpaket enthaltenen Dienstnamens zur Überprüfung der lokal gespeicherten Informationen, um die diesem Dienst zugeordnete Router-Adresskette zu identifizieren;
(115) Erstellen, durch den Border-Router, eines semantischen Pakets mit einem Header mit der IP-Adresse des Border-Routers als Quelladresse und der Dienst-ID des ausgewählten Dienstes als Zieladresse sowie mit den folgenden Routing-Anweisungen:
- Weiterleiten (Forward.pkt.chainID) des Pakets über einen Satz bekannter Router mit der für den empfangenen Dienstnamen lokal gespeicherten Router-Adresskette;
- Rundsenden (Forward.pkt.servID) des semantischen Pakets in Richtung der bestimmten Dienst-ID mit dem Radius $R$, der verwendet wird, um das Paket an die im Paket-Header angegebene Dienst-ID (IPv6-Adresse) weiterzuleiten;
- Beenden (Forward.pkt.end) der Ausführung von Anweisungen;
(116) Ausführen, durch den Border-Router, der ersten Anweisung auf der Liste;
(117) Empfangen, durch die Vielzahl von Routern, des semantischen Pakets und Ausführen der Anweisungen beginnend mit der ersten,
wobei, wenn die Router-Adresskette nicht leer ist, der Router die erste Adresse aus der Router-Adresskette entfernt und das resultierende Paket an den Nachbarrouter mit dieser IP-Adresse weiterleitet.

15. Verfahren (100) nach Anspruch 14, wobei, wenn die Router-Adresskette leer ist, der Router das semantische Paket rundsendet, bis ein Router mit einer Verbindung zu der Dienst-ID erreicht wird oder der Radius R abläuft, wobei der Router die Nutzlast des semantischen Pakets an den Border-Router sendet, der über die mit der ServiceID konfigurierten Schnittstellen erreichbar ist, wobei alle Router innerhalb des geografischen Bereichs die letzte im semantischen Paket enthaltene Anweisung (Forward.pkt.end) ausführen.

## Revendications

1. Procédé de routage sémantique (100) pour réseaux variables dans le temps, dans lequel le procédé (100) est configuré pour fournir un routage basé sur la source et sensible à la congestion pour des satellites, de préférence des constellations LEO, avec un système de résolution de noms distribué, comprenant :
une multitude de routeurs,
une multitude de routeurs de frontière, et
un fournisseur de services,
dans lequel le procédé (100) comprend une phase d'annonce comprenant les étapes suivantes :
(101) Créer une liste ordonnée de routeurs de frontière de la multitude de routeurs de frontière par ordre croissant de leur distance par rapport à un routeur de frontière actuel ;
(102) Créer, par le routeur de frontière actuel, un paquet sémantique avec une liste de plusieurs paires de directives du type suivant :
Transférer (Forward.pkt.areaID) le paquet sémantique vers une zone géographique spécifique avec un identifiant de géolocalisation d'une zone géographique d'un routeur de frontière de destination ;
Diffuser (Forward.pkt.servID) le paquet sémantique vers un identifiant de service spécifique avec un rayon R ;
Terminer (Forward.pkt.end) l'exécution de directives ;
(103) Exécuter, par le routeur de frontière actuel, la première directive de la liste ;
(104) Recevoir, par la multitude de routeurs, le paquet sémantique et exécuter les directives en commençant par la première, dans lequel :
si un routeur ne se trouve pas dans la zone géographique du routeur de frontière de destination, transférer davantage le paquet sémantique à des routeurs voisins ; ou
si un routeur se trouve dans la zone géographique du routeur de frontière de destination, le paquet sémantique est diffusé au sein de la zone géographique jusqu'à ce qu'il atteigne un routeur ayant une connexion avec le routeur de frontière de destination ou jusqu'à l'expiration du rayon R, dans lequel le routeur ayant une connexion avec le routeur de frontière de destination ou arrivant à l'expiration du rayon R envoie la charge utile du paquet sémantique au routeur de frontière actuel et le routeur ayant une connexion avec le routeur de frontière de destination ou arrivant à l'expiration du rayon R exécute la directive suivante dans le paquet sémantique, dans lequel tous les autres routeurs au sein de la zone géographique exécutent la dernière directive transportée dans le paquet sémantique (Forward.pkt.end) ;
dans lequel le procédé (100) comprend en outre une phase de transfert, dans lequel des informations préalablement échangées entre la multitude de routeurs de frontière sont utilisées pour transférer des paquets de données, dans lequel la phase de transfert est configurée pour être exécutée dans un mode proactif ou un mode réactif, dans lequel :
dans le mode proactif, la multitude de routeurs de frontière déclenchent d'eux-mêmes un paquet sémantique avec un message de découverte de chemin vers des services spécifiques afin d'identifier le chemin le plus approprié, dans lequel les informations concernant le chemin identifié sont placées dans une table de routage locale et utilisées en tant qu'étiquettes dans de futurs paquets sémantiques, permettant un transfert plus rapide à l'intérieur du réseau variable dans le temps, et
dans le mode réactif, la multitude de routeurs de frontière déclenchent la transmission d'un paquet sémantique pour transporter un paquet de données qui a été reçu depuis une interface se connectant à un réseau externe, dans lequel la multitude de routeurs de frontière créent un paquet sémantique qui est transféré par des routeurs, lesquels ne stockent aucun état dans le processus, dans lequel le paquet sémantique comprend un en-tête avec l'adresse IP du routeur de frontière en tant qu'adresse source et l'adresse IP d'un service de destination, ainsi qu'une charge utile avec le paquet de données reçu et un en-tête étendu qui permet à la charge utile d'être distribuée dans un mode unicast,
de telle sorte que le procédé (100) est mis en œuvre sur la base d'un routage géographique, qui est capable de s'adapter à la dynamique du réseau, en transférant le trafic via un ensemble de satellites aussi proches que possible de la destination.

2. Procédé (100) selon la revendication 1, dans lequel l'exécution de la phase de transfert dans le mode réactif comprend l'étape suivante:
(105.1) Recevoir, par la multitude de routeurs de frontière, un paquet sémantique depuis un réseau externe.

3. Procédé (100) selon la revendication 2, comprenant en outre l'étape suivante :
(106.1) Utiliser, par la multitude de routeurs de frontière, un nom de service transporté dans le paquet de données reçu pour vérifier des informations stockées localement afin d'identifier un routeur de frontière hébergeant ce service.

4. Procédé (100) selon la revendication 3, comprenant en outre l'étape suivante :
(107.1) Sélectionner, parmi la liste de routeurs de frontière d'hébergement possibles, un routeur spécifique qui est basé sur une stratégie de transfert configurée.

5. Procédé (100) selon la revendication 4, comprenant en outre les étapes suivantes :
(108.1) Créer, par la multitude de routeurs de frontière, un paquet sémantique avec les directives de routage suivantes dans l'en-tête étendu :
Transférer (Forward.pkt.areaID) le paquet vers une zone géographique spécifique avec un identifiant de géolocalisation de la zone géographique du routeur de frontière de destination ;
Diffuser (Forward.pkt.servID) le paquet vers un identifiant de service spécifique avec le rayon R utilisé pour transférer le paquet vers l'identifiant de service (adresse IPv6) indiqué dans l'en-tête de paquet ;
Terminer (Forward.pkt.end) l'exécution de directives ;
(109.1) Exécuter, par la multitude de routeurs de frontière, la première directive de la liste.

6. Procédé (100) selon la revendication 5, comprenant en outre l'étape suivante :
(110.1) Recevoir le paquet sémantique et exécuter les directives, par la multitude de routeurs de frontière, en commençant par la première, dans lequel :
si un routeur ne se trouve pas dans la zone géographique du routeur de frontière de destination, transférer le paquet sémantique au routeur voisin qui est géographiquement plus proche de la destination et qui est le moins congestionné ; ou
si un routeur se trouve dans la zone géographique du routeur de frontière de destination, le paquet sémantique est diffusé au sein de la zone géographique jusqu'à ce qu'il atteigne le routeur ayant une connexion avec l'identifiant de service indiqué dans l'en-tête de paquet ou jusqu'à l'expiration du rayon R, dans lequel le routeur envoie la charge utile du paquet sémantique au routeur de frontière, dans lequel tous les autres routeurs au sein de la zone géographique exécutent la dernière directive transportée dans le paquet sémantique (Forward.pkt.end).

7. Procédé (100) selon la revendication 1, dans lequel l'exécution de la phase de transfert dans le mode proactif comprises les étapes suivantes :
(105.2) Sélectionner, par la multitude de routeurs de frontière, l'un des services installés localement.

8. Procédé (100) selon la revendication 7, comprenant en outre l'étape suivante :
(106.2) Créer, par la multitude de routeurs de frontière, un paquet sémantique avec les directives de routage suivantes dans l'en-tête étendu :
Collecter (Discover.path.to.arealD) des informations sur des routeurs dans le chemin vers une zone géographique spécifique avec un identifiant de géolocalisation de la zone géographique du routeur de frontière de destination ;
Créer (Create.reverse.pkt) un nouveau paquet sémantique ;
Terminer (Forward.pkt.end) l'exécution de directives ;
(107.2) Exécuter, par la multitude de routeurs de frontière, la première directive de la liste.

9. Procédé (100) selon la revendication 8, comprenant en outre l'étape suivante :
(108.2) Recevoir, par la multitude de routeurs de frontière, le paquet sémantique et exécuter les directives en commençant par la première, dans lequel :
si le routeur ne se trouve pas dans la zone géographique du routeur de frontière de destination, le routeur :
i. Identifie le routeur voisin qui est géographiquement plus proche de la destination et est le moins congestionné ;
ii. Ajoute l'identifiant du nœud voisin sélectionné en tête de la chaîne d'adresses de routeurs dans la charge utile de paquet ; ou
iii. Transfère le paquet sémantique au routeur voisin sélectionné,
si le routeur se trouve dans la zone géographique du routeur de frontière de destination, le routeur ajoute son identifiant en tête de la chaîne d'adresses de routeurs, et exécute la directive suivante.

10. Procédé (100) selon la revendication 9, comprenant en outre l'étape suivante :
(109.2) Créer, par le routeur de destination, un nouveau paquet sémantique avec l'adresse IP du routeur actuel en tant qu'adresse source, l'identifiant de service tel que transporté dans le paquet précédent en tant qu'adresse de destination, l'index de chaîne dans la tête de paquet à 1, et les directives suivantes :
Transférer (Forward.pkt.chainID) le paquet sémantique vers une zone géographique spécifique avec la chaîne d'adresses de routeurs collectée à partir du paquet sémantique reçu ;
Stocker (Stores.chain.servID) des informations concernant une chaîne reçue de routeurs ;
Terminer (Forward.pkt.end) l'exécution de directives.

11. Procédé (100) selon la revendication 10, comprenant en outre l'étape suivante :
(110.2) Exécuter, par le routeur de destination, la première directive.

12. Procédé (100) selon la revendication 11, comprenant en outre l'étape suivante :
(111.2) Exécuter, par la multitude de routeurs de frontière, la première directive de la liste, en transférant le paquet sémantique au routeur dont l'adresse IP est la première indiquée dans la directive et incrémenter l'index de chaîne de 1.

13. Procédé (100) selon la revendication 12, comprenant en outre l'étape suivante :
(112.2) Exécuter la deuxième directive, par la multitude de routeurs recevant un paquet sémantique avec un index de chaîne supérieur à la taille de la chaîne d'adresses de routeurs, et stocker la chaîne d'adresses de routeurs associée au service dont l'identifiant est indiqué dans l'en-tête de paquet en tant qu'IP de destination.

14. Procédé (100) selon les revendications 7 à 13, dans lequel pour tous les services qui ont une chaîne d'adresses de routeurs non vide, le routeur de frontière utilisera la procédure suivante pour transférer des paquets de données :
(113) Recevoir, par le routeur de frontière, un paquet depuis un réseau externe ;
(114) Utiliser, par le routeur de frontière, le nom de service transporté dans le paquet de données reçu pour vérifier les informations stockées localement afin d'identifier la chaîne d'adresses de routeurs associée à ce service ;
(115) Créer, par le routeur de frontière, un paquet sémantique avec un en-tête ayant l'adresse IP du routeur de frontière en tant qu'adresse source et l'identifiant de service du service sélectionné en tant qu'adresse de destination, ainsi qu'avec les directives de routage suivantes :
Transférer (Forward.pkt.chainID) le paquet via un ensemble de routeurs connus avec la chaîne d'adresses de routeurs stockée localement pour le nom de service reçu ;
Diffuser (Forward.pkt.servID) le paquet sémantique vers un identifiant de service spécifique avec le rayon R utilisé pour transférer le paquet vers l'identifiant de service (adresse IPv6) indiqué dans l'en-tête de paquet ;
Terminer (Forward.pkt.end) l'exécution de directives ;
(116) Exécuter, par le routeur de frontière, la première directive de la liste ;
(117) Recevoir, par la multitude de routeurs, le paquet sémantique et exécuter les directives en commençant par la première, dans lequel, si la chaîne d'adresses de routeurs n'est pas vide, le routeur supprime la première adresse de la chaîne d'adresses de routeurs et transfère le paquet résultant au routeur voisin ayant cette adresse IP.

15. Procédé (100) selon la revendication 14, dans lequel, si la chaîne d'adresses de routeurs est vide, le routeur diffuse le paquet sémantique jusqu'à atteindre un routeur ayant une connexion avec l'identifiant de service ou jusqu'à l'expiration du rayon R, dans lequel le routeur envoie la charge utile du paquet sémantique vers le routeur de frontière qui est accessible via les interfaces configurées avec le ServiceID, dans lequel tous les routeurs au sein de la zone géographique exécutent la dernière directive transportée dans le paquet sémantique (Forward.pkt.areaID).
